# EUROPÄISCHE PATENTSCHRIFT

(11) **EP 0 823 885 B1**
(45) Veröffentlichungstag und Bekanntmachung des Hinweises auf die Patenterteilung: **30.01.2002**
(21) Anmeldenummer: 96914135.7
(22) Anmeldetag: 26.04.1996
(51) Int. Cl.: C01G 1/00, C01B 13/14, C01G 25/02, C01F 7/02

(54) **VERFAHREN ZUR HERSTELLUNG SCHWACH AGGLOMERIERTER NANOSKALIGER TEILCHEN**
PROCESS FOR PRODUCING WEAKLY AGGLOMERATED NANOSCALAR PARTICLES
PROCEDE DE PRODUCTION DE PARTICULES NANOSCALAIRES FAIBLEMENT AGGLOMEREES

(30) Priorität: 29.04.1995 DE 19515820
(43) Veröffentlichungstag der Anmeldung: 18.02.1998
(73) Patentinhaber: INSTITUT FÜR NEUE MATERIALIEN gemeinnützige GmbH, 66123 Saarbrücken (DE)
(72) Erfinder: BURGARD, Detlef, D-66333 Völklingen (DE); NASS, Rüdiger, D-66292 Riegelsberg (DE); SCHMIDT, Helmut, D-66130 Saarbrücken (DE)
(74) Vertreter: Barz, Peter, Dr.
(86) Internationale Anmeldenummer: EP9601756
(87) Internationale Veröffentlichungsnummer: WO9634829

(56) Entgegenhaltungen:
- EP-A- 0 253 552
- WO-A-93/21127
- GB-A- 2 168 334
- JOURNAL OF SOL-GEL SCIENCE AND TECHNOLOGY, Bd. 1, Nr. 3, 1994, DORDRECHT NL, Seiten 233-240, XP000442436 M. CHATRY ET AL: "the role of complexing ligands in the formation of non-aggregated nanoparticles of zirconia"
- JOURNAL OF MATERIALS SCIENCE, Bd. 26, Nr. 9, 1.Mai 1991, Seiten 2353-2358, XP000218029 LEROT L ET AL: "CHEMICAL CONTROL IN PRECIPITATION OF SPHERICAL ZIRCONIA PARTICLES"

## Beschreibung

Die vorliegende Erfindung betrifft ein Verfahren zur Herstellung schwach agglomerierter, verdichteter und/oder kristallisierter nanoskaliger Teilchen.

Verfahren zur Herstellung von Pulvern mit Primärteilchengrößen unter 100 nm (nanoskalige Pulver) sind in den letzten Jahren auf ein zunehmendes Interesse gestoßen, da diese Pulver das Potential besitzen, auf ihrer Grundlage völlig neue Werkstoffe wie z.B. Keramiken oder Komposite zu entwickeln. Ähnlich wie bei den heute schon verfügbaren sub-µm-Pulvern (Teilchendurchmesser von 0,1 bis 1 µm) werden auch an nanoskalige Pulver hohe Qualitätsanforderungen gestellt, die aber je nach Material und Anwendung unterschiedlich sind. Für keramische Pulver sind z.B. folgende Kriterien von Bedeutung:
- hohe chemische Reinheit
- Phasenbestand
- Pulverdichte
- Kristallinität
- Teilchengrößenverteilung und Teilchenmorphologie
- spezifische Oberfläche
- Agglomerationszustand.

Insbesondere der zuletzt genannte Punkt ist für die Nutzung von nanoskaligen Pulvern in pulvermetallurgischen Verarbeitungs- und Fertigungsprozessen von großer Bedeutung. In der Regel sollen die Pulverteilchen eine möglichst hohe Dichte aufweisen und/oder kristalline Strukturen besitzen. Die zwangsläufig vorliegenden Agglomerate sollten so beschaffen sein, daß sie bei der Verarbeitung wieder auf ihre Primärteilchengröße zerteilt werden können. Nur unter diesen Voraussetzungen kann das Potential nanoskaliger Pulver optimal genutzt werden. Dies bedeutet, daß weiche Agglomerate benötigt werden. Es sind somit Teilchen erforderlich, die es zulassen, den Agglomerationszustand zwischen Nanoteilchen einzustellen. Dies kann direkt bei der Synthese oder in einem nachgeschalteten Prozeß erfolgen.

Zur Herstellung nanoskaliger (keramischer) Pulver werden in der Literatur physikalische und chemische Verfahren beschrieben. Die physikalischen Verfahren werden in drei Kategorien eingeteilt, nämlich in vacuum-, gas-phase- und condensed-phase-Synthesen. Deren Anwendbarkeit ist jedoch durch den geringen Stoffumsatz auf die Darstellung kleiner Pulvermengen beschränkt.

Wachsende Bedeutung kommt bei der Pulversynthese Verfahren unter Einbeziehung chemischer Reaktionen zu, wie z.B. der Hydrothermalsynthese, Fällungsreaktionen, der Flammenhydrolyse, der Plasmasynthese, dem Sol-Gel-Prozeß oder Emulsionsverfahren.

Bei der Hydrothermalsynthese wird unter erhöhtem Druck und erhöhten Temperaturen (oberhalb der kritischen Daten des Lösungsmittels) aus anorganischen Salzen über Fällungsreaktionen das entsprechende Oxid, Oxidhydrat oder Hydroxid gebildet. Durch Einstellung der optimalen Reaktionsparameter (pH-Wert, Art und Konzentration der Ausgangsverbindungen, Druck, Temperatur) können dabei Kristallitgrößen von ca. 20 nm erreicht werden. Nachteilig wirkt sich dabei jedoch die Bildung von nicht mehr auflösbaren Agglomeraten aus. Diese Agglomerate entstehen dadurch, daß an der Teilchenoberfläche vorhandene Metall-OH-Gruppen beim Trocknen und Kalzinieren des Pulvers Kondensationsreaktionen eingehen. Da die Agglomeratbildung in der Regel nicht reversibel ist, kann das Potential dieser Technik zur Zeit nur mit Einschränkungen genutzt werden.

Die Flammenhydrolyse ist ein Standardverfahren zur Aerosilherstellung. Sie liefert hohe Pulverausbeuten und ist auf viele Stoffsysteme anwendbar. Dabei werden flüchtige Verbindungen wie z.B. SiCl₄, TiCl₄ oder ZrCl₄ in einer Wasserstoff-Sauerstoff-Flamme zu feinsten Oxidteilchen umgesetzt. Zwar lassen sich Oxidpulver mit Teilchengrößen zwischen 5 und 50 nm mit Hilfe der Flammenhydrolyse herstellen, doch ist ein Nachteil dieses Verfahrens die starke Agglomeratbildung, da die Kohäsion zwischen den Teilchen mit abnehmender Teilchengröße stark zunimmt. Eine Redispergierung dieser Pulver auf ihre Primärteilchengröße ist meist nicht oder nur zu einem geringen Teil möglich.

Über die Plasmasynthese lassen sich neben oxidischen Pulvern auch Nitride und Carbide herstellen. Dabei werden z.B. in einem induktiven Plasma Metallpulver oder geeignete Metallverbindungen verdampft und mit Ammoniak zur Herstellung von Nitriden bzw. mit Methan für Carbide zur Reaktion gebracht. Durch dieses Verfahren lassen sich hochreine, feinste sphärische Pulver herstellen und bei optimaler Einstellung der Reaktionsparameter liefert es Teilchen mit Durchmessern von etwa 5 nm, die zwar agglomeriert sind, aber nur wenige Festkörperbrücken zwischen den Teilchen aufweisen. Allerdings handelt es sich dabei um ein technisch sehr aufwendiges Verfahren, das mit einem hohen apparativen Aufwand verbunden ist.

Ein weiteres Verfahren stellt der Sol-Gel-Prozeß dar. Hierbei wird durch Hydrolyse und Kondensation geeigneter Ausgangsverbindungen wie z.B. reaktiver Metallalkoholate in einem Lösungsmittel ein Sol (lösliche Oligomere oder Polymere oder kolloidale Lösung) hergestellt. Im weiteren Reaktionsverlauf bildet sich ein Gel (Festkörper), das durch thermische Nachbehandlung in ein kristallines Pulver überführt werden kanh. Bei Einstellung bestimmter Parameter ist es möglich, die Reaktion so zu steuern, daß Sole mit Teilchengrößen weit unterhalb 50 nm erzeugt werden können. Ein Nachteil dieses Verfahrens ist, daß amorphe Materialien anfallen, die über eine thermische Nachbehandlung in ein kristallines Produkt überführt werden müssen. Dabei kommt es aufgrund der hohen OH-Gruppendichte an den Teilchenoberfläche über Kondensationsreaktionen zur Halsbildung zwischen den Teilchen (Aggregation = harte Agglomerate), die eine Zerteilung der Pulver auf die Primärteilchengröße bei der Verarbeitung unmöglich macht.

Einen relativ neuen Weg zur Präzipitation feinster keramischer Pulver beschreitet die Emulsionstechnik. Dabei wird eine wäßrige Phase in Form feinster Tröpfchen in einer mit Wasser nicht mischbaren Flüssigkeit dispergiert. Die Tröpfchengröße sowie die Stabilität der Emulsionen sind von vielen Faktoren abhängig, die aber für Pulversynthesen bisher erst ansatzweise untersucht wurden.

Voraussetzung für die Bildung von Pulvern bei der Emulsionstechnik ist, daß die dispergierte wäßrige Phase durch geeignete chemische Reaktionen wie Fällungs- oder Kondensationsreaktionen in eine feste Phase überführt werden kann. Eine wesentliche Rolle bei der Emulsionsbildung spielen oberflächenaktive Substanzen (Emulgatoren), mit deren Hilfe eine Salzlösung zu feinsten Tröpfchen in einem Kohlenwasserstoff emulgiert werden kann. Die so emulgierten Wassertröpfchen können als submikroskopische Minireaktoren aufgefaßt werden, die die gleichen Eigenschaften wie makroskopische Lösungen aufweisen. Die Ausfällung der Metallhydroxide bzw. -oxide kann über eine Erhöhung des pH-Wertes erfolgen. Dies wird z.B. durch Einleiten von Ammoniakgas in die Emulsion oder durch den Zusatz organischer Basen, die im Dispergiermedium löslich sein müssen, erreicht. Zur Überführung der flüssigen in eine feste Phase wird das Wasser durch azeotrope Destillation entfernt. Dadurch werden die gebildeten Teilchen verdichtet. Eine Agglomeration der Teilchen wird durch das Vorhandensein der Emulgatoren, die die reaktiven Oberflächen abschirmen, weitgehend verhindert.

Über Emulsionen können zwar qualitativ hochwertige nanoskalige Pulver hergestellt werden, die Volumenausbeute bei solchen Emulsionsverfahren ist aber häufig gering, so daß diese Verfahren zur Pulverherstellung technisch nicht ausgenutzt werden. Ein entscheidender Grund für die geringe Volumenausbeute bei Emulsionsverfahren liegt darin, daß bei Emulsionen immer in Zweiphasensystemen gearbeitet wird, wobei die Precursoren aber nur über eine Phase eingebracht werden.

Wie oben gezeigt, gibt es eine Vielzahl von Synthesevarianten für sehr feine Pulver. Ein ungeklärtes Problem stellt aber die Agglomerationskontrolle, insbesondere bei der Verdichtung und/oder Kristallisation von nanoskaligen Teilchen (Durchmesser 1 - 100 nm) dar.

In WO-A-93/21127 ist ein Verfahren zur Herstellung schwach agglomerierter, nanoskaliger Teilchen beschrieben, bei dem die Teilchen in Gegenwart eines Oberflächenmodifikators in einem Lösungsmittel suspendiert und erhitzt werden.

Im Journal of Materials Science 26 (1991), Nr. 9, S. 2353-2358, wird die Herstellung kristalliner nanoskaliger Teilchen durch Hydrolyse von Zirkonalkoxiden in Gegenwart von Carbonsäuren und anschließendes Brennen der ausgefällten Pulver zwischen 300 und 600°C beschrieben.

Aufgabe der vorliegenden Erfindung war die Bereitstellung nanoskaliger, schwach agglomerierter Pulver mit hoher Teilchendichte und/oder kristalliner Struktur.

Erfindungsgemäß wird diese Aufgabe gelöst durch ein Verfahren zur Herstellung schwach agglomerierter, verdichteter und/oder kristallisierter nanoskaliger Teilchen, bei dem entweder
(a) eine amorphe oder teilkristalline nanoskalige Teilchen enthaltende Suspension in üblicher Weise aus Precursoren für die nanoskaligen Teilchen hergestellt wird, wobei die Herstellung in einem Lösungsmittel, das für die Teilchen kein oder nur ein geringes Lösungsvermögen besitzt, und in Gegenwart mindestens einer oberflächenblockierenden Substanz durchgeführt wird, oder
(b) ein bereits gebildetes Pulver aus amorphen oder teilkristallinen nanoskaligen Teilchen in Gegenwart der unter (a) angegebenen mindestens einen oberflächenblockierenden Substanz in dem unter (a) angegebenen Lösungsmittel suspendiert wird, oder
(c) ein amorphe oder teilkristalline nanoskalige Teilchen enthaltendes Sol in Gegenwart der unter (a) angegebenen mindestens einen oberflächenblockierenden Substanz in dem unter (a) angegebenen Lösungsmittel suspendiert wird; und
die so hergestellte Suspension bei einer Temperatur zwischen 150 und 350°C unter einem Druck zwischen 10 und 100 bar behandelt wird.

Vorzugsweise handelt es sich bei den nanoskaligen Teilchen um Oxid(hydrat)-, Sulfid-, Selenid-, Tellurid- und/oder Phosphid-Teilchen, besonders bevorzugt um Oxid(hydrat)-Teilchen.

Die Oxid(hydrat)e sind vorzugsweise solche, die sich zur Herstellung von Glas oder Keramik eignen. Insbesondere werden sie aus Oxid(hydraten) von Haupt- und Nebengruppenmetallen wie z.B. Mg, Ca, Sr, Ba, Al, Si, Sn, Pb, Bi, Ti, Zr, V; Mn, Nb, Ta, Cr, Mo, W, Fe, Co, Ru, Cu, Zn, Ce und Y ausgewählt. Besonders bevorzugt sind solche von Ba, Al, Ti, Zr, Fe, Y, Sc, Ru, Zn und Pb.

Bevorzugte Beispiele für Oxide dieser Elemente sind Al₂O₃, Fe₂O₃, ZrO₂, TiO₂, Y₂O₃, Y₂O₃/ZrO₂, Pb(ZrTi)O₃ (PZT), BaTiO₃, BaRuO₃, ZnO und Sc₂O₃/ZrO₂.

Bei der obigen Variante (a) geht man vorzugsweise so vor, daß man aus einer Lösung oder einem Sol, die bzw. das mindestens ein als Oxid(hydrat) ausfällbares Element enthält, das mindestens eine Oxid(hydrat) in Gegenwart einer oberflächenblockierenden Substanz durch Änderung des pH-Wertes und/oder durch Wasserzugabe ausfällt.

Die Lösung oder das Sol, die bzw. das das mindestens eine als Oxid(hydrat) ausfällbare Element enthält, kann sowohl wäßrig als auch nicht-wäßrig (organisch) sein. Als nicht-wäßrige Lösungsmittel werden diejenigen bevorzugt, die mit Wasser gut mischbar sind, wie z.B. ein- und mehrwertige Alkohole wie z.B. Methanol, Ethanol, n- und i-Propanol, Ethylenglykol, Propylenglykol, Diethylenglykol und Glycerin, Ketone wie Aceton und Butanon, Ester wie Essigsäureethylester, Amide wie Dimethylformamid und Dimethylacetamid und Sulfoxide wie Dimethylsulfoxid. Besonders bevorzugte organische Lösungsmittel zur Verwendung in dieser Variante sind aliphatische Alkohole, insbesondere diejenigen mit 1 bis 3 Kohlenstoffatomen.

Wenn es sich bei der verwendeten Ausgangslösung um eine wäßrige Lösung handelt, enthält diese mindestens ein Element, das durch Änderung des pH-Wertes als Oxid(hydrat) ausfällbar ist, in gelöster Form. Nicht-wäßrige Lösungen können auch Elemente in ihrer gelösten Form enthalten, die ohne pH-Wert-Änderung (z.B. nur durch Wasserzugabe) ausgefällt werden können.

In wäßrigen Ausgangslösungen liegt das als Oxid(hydrat) ausfällbare Element bevorzugt in Form eines hydrolysierbaren Salzes vor, in nicht-wäßrigen Lösungen bevorzugt als hydrolysierbare metallorganische Verbindung. Die Konzentrationen sind in allen Fällen nach oben durch die Löslichkeit der jeweiligen Verbindung im eingesetzten Lösungsmittel beschränkt. Nach unten sollte die Konzentration aus wirtschaftlichen Gründen 10 Gew.-% (bezogen auf die eingesetzte hydrolysierbare Verbindung) nicht unterschreiten.

Bei der Verwendung von Salzlösungen werden bevorzugt solche Salze eingesetzt, die thermisch leicht entfernbare oder zersetzbare Gegenionen aufweisen. Besonders geeignet sind deshalb Nitrate oder Salze von Carbonsäuren (z.B. Formiate, Acetate und Propionate) sowie Ammoniumsalze.

Neben solchen einfachen Salzlösungen können auch wäßrige Sole eingesetzt werden, die z.B. hergestellt werden können, indem ein Metallalkoxid, das in beispielsweise einem kurzkettigen Alkohol (z.B. einem C₁-C₃-Alkohol) gelöst ist, durch Wasserzugabe hydrolysiert wird. Es können jedoch auch käufliche Sole wie z.B. Wasserglas eingesetzt werden. Diese Sole können auch als Ausgangsmaterialien für die obige Variante (c) dienen. Als Lösungsmittel zur Herstellung der Suspensionen gemäß den Varianten (a) bis (c) kommen allgemein alle diejenigen in Frage, die die zu bildenden bzw. bereits vorhandenen Teilchen nicht lösen bzw. nur in vernachlässigbarem Ausmaß anlösen. Diese Eigenschaft hängt selbstverständlich von der Natur der anwesenden Teilchen ab. Allgemein sind konkrete Beispiele für einsetzbare Lösungsmittel Wasser, Alkohole, Glykole, Amine, Amide, aliphatische, cycloaliphatische und aromatische Kohlenwasserstoffe, die gegebenenfalls substituiert - insbesondere halogeniert (bevorzugt chloriert) - sein können, und geeignete Mischungen dieser Lösungsmittel. Selbstverständlich ist es insbesondere bei der obigen Variante (a) auch möglich, nach der in-situ-Erzeugung der nanoskaligen Teilchen das Lösungsmittel gegen ein für die Verdichtung und/oder Kristallisation günstigeres ganz oder teilweise auszutauschen (z.B. durch Verdampfen und Zugabe des neuen Lösungsmittels). Dies kann insbesondere dann von Vorteil sein, wenn die Suspension erhöhten Temperaturen und gegebenenfalls erhöhten Drücken unterhalb den kritischen Daten des Lösungsmittels ausgesetzt werden soll, wie dies unten näher beschrieben wird.

Als oberflächenblockierende Substanzen können alle Verbindungen eingesetzt werden, die eine chemische Bindung bzw. eine starke Wechselwirkung mit der Oberfläche der Teilchen eingehen können. Beispiele für chemisch gebundene Oberflächenblocker sind die herkömmlichen Komplexbildner wie z.B. (Poly)carbonsäuren, Poly-, insbesondere Diamine, β-Dicarbonylverbindungen wie β-Diketone und β-Carbonylcarbonsäuren sowie Aminosäuren. Andere Beispiele für oberflächenblockierende Substanzen sind langkettige Alkohole (vorzugsweise mit 8 bis 30 und insbesondere mit 8 bis 15 Kohlenstoffatomen), Cellulose-Derivate und nichtionische Tenside. Nichtionische Tenside, gegebenenfalls in Kombination mit anderen oberflächenblockierenden Substanzen, werden erfindungsgemäß als oberflächenblockierende Substanzen bevorzugt, insbesondere in Variante (a).

Konkrete Beispiele für erfindungsgemäß einsetzbare nichtionische Tenside sind Sorbitanester von Fettsäuren (wie z.B. die unter dem Warenzeichen Span^{(R)} vertriebenen), Polyethylenoxid-derivate dieser Sorbitanester (z.B. die unter dem Warenzeichen Tween^{(R)} vertriebenen), Fettsäurepolyglykolester (z.B. diejenigen aus der Emulsogen^{(R)}-Reihe) sowie Tenside, die unter den Warenzeichen Brij^{(R)}, Arlacel^{(R)}, Emulan^{(R)} und Marlovet^{(R)} usw. auf dem Markt sind. Diese Aufzählung stellt jedoch nur eine kleine Auswahl aus den erfindungsgemäß einsetzbaren nichtionischen Tensiden dar.

Im erfindungsgemäßen Verfahren kann jedoch auch mehr als eine oberflächenblockierende Substanz eingesetzt werden, z.B. eine Mischung von mindestens zwei nichtionischen Tensiden. Außerdem ist es z.B. möglich, eine Mischung von einen oder mehreren nichtionischen Tensiden mit mindestens einem längerkettigen aliphatischen Alkohol (mit vorzugsweise 8 bis 15 Kohlenstoffatomen wie z.B. Octanol, Decanol, Undecanol, Dodecanol, Tridecanol und Pentadecanol) zu verwenden. Besonders bevorzugt wird eine Mischung aus zwei nichtionischen Tensiden bzw. eine Mischung aus einem Tensid und einem längerkettigen aliphatischen Alkohol eingesetzt. Bei der Verwendung von Tensidmischungen hat es sich als günstig erwiesen, solche Tenside einzusetzen, die insbesondere in ihren hydrophoben Anteilen gleiche oder ähnliche Strukturmerkmale aufweisen, wie z.B. das Paar Tween^{(R)}80/Emulsogen^{(R)} OG, in dem der hydrophobe Anteil in beiden Fällen von einer Ölsäureeinheit abgeleitet ist.

Im erfindungsgemäßen Verfahren beträgt die Gesamtkonzentration der eingesetzten oberflächenblockierenden Substanzen vorzugsweise 2 bis 30, insbesondere 2 bis 20 und besonders bevorzugt 5 bis 10 Gew.-%, bezogen auf den zu bildenden bzw. bereits vorhandenen Feststoff.

Die erfindungsgemäß eingesetzten oberflächenblockierenden Substanzen haben die Aufgabe, die gebildeten Teilchen während der Fällung an ihrer Oberfläche zu modifizieren und zu passivieren. Ohne an eine bestimmte Theorie gebunden werden zu wollen, wird angenommen, daß die oberflächenblockierenden Substanzen mit den Teilchenoberflächen in Wechselwirkung treten und so eine thermodynamische Stabilisierung der Oberfläche bewirken. Die freie Reaktionsenthalpie der Wechselwirkungsreaktion kompensiert die durch ein Teilchenwachstum stattfindende Abnahme der freien Oberflächenenthalpie. Dadurch wird ein unkontrolliertes Teilchenwachstum unterdrückt und es entstehen Teilchen mit einer sehr einheitlichen Teilchengrößenverteilung. Darüber hinaus stabilisiert diese Oberflächenmodifizierung die Teilchen durch Ausbildung einer sphärischen Barriere gegen Agglomeration. Dies kann sich auch beim Kalzinieren der isolierten Teilchen im Ofen positiv auswirken, da sich viele der einsetzbaren oberflächenblockierenden Substanzen erst bei Temperaturen über 400°C vollständig zersetzen und bei diesen Temperaturen die Desaktivierung der Teilchenoberflächen durch Abspaltung von H₂O schon weit fortgeschritten ist, was eine Agglomeration der Teilchen verhindern oder zumindest minimieren kann. Wird die Kristallisation und/oder Verdichtung der Teilchen direkt in der Suspension bei höheren Temperaturen und Drücken unterhalb der kritischen Daten des Lösungsmittels durchgeführt, so zeigt sich, daß kristalline Teilchen agglomeratfrei erhalten werden können, da die oberflächenmodifizierende Schicht um die Teilchen herum vollständig erhalten bleibt.

Die in Variante (a) des erfindungsgemäßen Verfahrens insbesondere im Falle von Oxid(hydrat)en gegebenenfalls erforderliche Änderung des pH-Wertes bzw. die Einstellung des zur Fällung benötigten pH-Wertes kann prinzipiell durch Einsatz jeder basischen oder sauren Verbindung erreicht werden, die im jeweiligen Lösungsmittel löslich ist. Bevorzugt werden solche Verbindungen eingesetzt, die gegebenenfalls durch eine thermische Behandlung der gebildeten Teilchen leicht wieder entfernt werden können. Für eine pH-Wert-Erhöhung kommen daher z.B. Ammoniak (als,Lösung oder gasförmig) oder organische Basen wie Amine oder quaternäre Ammoniumsalze in Frage, während sich zur Absenkung des pH-Wertes besonders HNO₃ und kurzkettige Carbonsäuren (vorzugsweise mit 1 - 3 Kohlenstoffatomen wie Ameisen-, Essig- oder Propionsäure) eignen.

Bei der Herstellung nanoskaliger Teilchen aus Salzlösungen bzw. Solen besteht ein besonders bevorzugtes Verfahren zur Änderung des pH-Wertes im Einsatz von sauren oder basischen (organischen oder anorganischen) lonenaustauscherharzen. Eine Änderung des pH-Wertes wird in diesem Fall erreicht, indem die in der Salzlösung befindlichen Gegenionen der zu fällenden Elemente mit Hilfe der Ionenaustauscherharze durch H⁺ bzw. OH⁻ ersetzt werden. Dieses Verfahren hat den Vorteil, daß in der die nanoskaligen Teilchen enthaltenden Suspension nach der Fällung keine Fremdsalze vorliegen, die entfernt werden müssen. Praktisch läßt sich ein solcher Austausch z.B. durchführen, indem man die zu fällende Salzlösung (oder das Sol) in der auch die entsprechende oberflächenblockierende Substanz gelöst ist, über eine Ionenaustauschersäule leitet, wobei die Verweilzeit der Lösung in der Säule so bemessen ist, daß der Austausch und die Fällung im wesentlichen vollständig sind. Eine andere Möglichkeit besteht darin, die entsprechende Salzlösung (oder das Sol) mit der etwa stöchiometrischen Menge Ionenaustauscherharz zu rühren und nach vollständigem Austausch abzutrennen. Erfindungsgemäß können alle im Handel erhältlichen Ionenaustauscherharze eingesetzt werden, wobei jedoch organische Harze bevorzugt werden.

Die konkrete Ausfällungsreaktion kann auf vielfältige Art und Weise erfolgen, abhängig auch davon, ob zur Ausfällung eine pH-Wert-Änderung oder eine Wasserzugabe erfolgen soll.

Besonders bevorzugt werden zur Ausfällung jedoch zwei Varianten. Bei der ersten Variante wird der Lösung oder dem Sol, die bzw. das z.B. das mindestens eine als Oxid(hydrat) ausfällbare Element und die mindestens eine oberflächenblockierende Substanz (gelöst oder emulgiert) enthält, mindestens eine saure oder basische Substanz und/oder Wasser zugesetzt.

Bei der zweiten besonders bevorzugten Variante wird die Lösung oder das Sol die bzw. das das mindestens eine als Oxid(hydrat) ausfällbare Element enthält einer wäßrigen Lösung von zur Ausfällung geeignetem pH-Wert, die die mindestens eine oberflächenblockierende Substanz enthält, zugegeben (z.B. zugetropft).

Nachdem die Suspension von nanoskaligen Teilchen nach einer der obigen Varianten (a) bis (c) hergestellt wurde, wird sie erfindungsgemäß Bedingungen unterzogen, die zu einer Verdichtung und/oder Kristallisation der nanoskaligen Teilchen führen.

Die wird Suspension zu diesem Zweck (vorzugsweise für mehrere (z.B. 1 bis 24 Stunden) einer erhöhten Temperatur und einem erhöhten Druck ausgesetzt. Besonders bevorzugt erfolgt diese Behandlung unterhalb der kritischen Daten des anwesenden Lösungsmittels. Die erhöhten Temperaturen müssen selbstverständlich auch gewährleisten, daß sich die oberflächenblockierende Substanz und das Lösungsmittel nicht oder nur unwesentlich zersetzen.

Unter erhöhter Temperatur wird hierbei eine Temperatur zwischen etwa 150 und 350°C und unter erhöhtem Druck ein solcher zwischen etwa 10 und 100 bar verstanden. Beispielsweise wird die die nanoskaligen Teilchen enthaltende Suspension, die gemäß den Varianten (a) bis (c) hergestellt wurde, vorzugsweise ohne weitere Vorbehandlung in einen Druckbehälter gegeben und bei entsprechendem Druck und entsprechender Temperatur behandelt. Die zur Verdichtung bzw. Kristallisation der jeweiligen Teilchen erforderlichen Parameter (Druck, Temperatur, Behandlungsdauer) können durch entsprechende Reihenversuche ohne weiteres ermittelt werden.

Aus der nach dem erfindungsgemäßen Verfahren hergestellten Suspension können die verdichteten bzw. kristallisierten Teilchen durch Entfernung der flüssigen Phase bzw. des Lösungsmittels (z.B. durch Filtration und/oder Destillation) isoliert werden. Anschließend können sie (vorzugsweise bei erhöhten Temperaturen) getrocknet und gegebenenfalls kalziniert werden.

Es ist auch möglich, die erfindungsgemäß erhaltenen verdichteten und/oder kristallisierten Teilchen vor dem Trocknen bzw. vor dem Kalzinieren anderen auf diesem Gebiet üblichen Verfahren zu unterziehen. Beispielsweise kann die oberflächenblockierende Substanz von der Oberfläche der Teilchen entfernt und gegebenenfalls durch eine oberflächenmodifizierende Substanz ersetzt werden.

Zur Entfernung der oberflächenblockierenden Substanz kann man die Teilchen z.B. waschen, einer chemischen Reaktion zwecks Zerstörung der oberflächenmodifizierenden Substanz und/oder einer Dialyse unterziehen.

Die Oberflächenmodifizierung von nanoskaligen Teilchen (z.B. mit Carbonsäuren, Aminen etc.) ist in der Literatur bereits ausführlich beschrieben und muß hier nicht weiter erläutert werden.

Mit Hilfe des erfindungsgemäßen Verfahrens können nanokristalline, schwach agglomerierte, verdichtete und/oder kristallisierte Teilchen (Größen üblicherweise zwischen 5 und 20 nm) erhalten werden.

Die erfindungsgemäß zugänglichen nanoskaligen Pulver lassen sich in üblicher Weise weiterverarbeiten, indem man sie z.B. durch Pressen oder andere Formgebungsverfahren (Schlicker-(druck)guß, Extrusion, Siebdruck, Foliengießen, usw.) mit anschließendem Sintern in Formkörper oder Schichten umwandelt, oder vorzugsweise durch Gießen zu Folien mit einer Dichte von vorzugsweise ≤ 20 µm verarbeitet. Die erfindungsgemäß hergestellten Pulver zeichnen sich aufgrund ihrer geringen Teilchengröße und ihrer guten Dispergierfähigkeit durch eine sehr hohe Sinteraktivität aus.

Die folgenden Beispiele veranschaulichen die vorliegende Erfindung, ohne deren Umfang zu beschränken.

### BEISPIEL 1

Eine Mischung von 12,4 g Y(NO₃)₃.4 H₂O und 255 g Zirkonium-n-propylat wurde in 64 ml Ethanol gelöst. Die resultierende Lösung wurde unter Rühren zu 320 ml einer wäßrigen, ammoniakalischen Lösung (pH = 12), die jeweils 2,1 g Emulsogen^{(R)} OG und Tween^{(R)} 80 enthielt, getropft. Nach beendeter Zugabe wurde die gebildete Suspension in einem Rührautoklaven bei 250°C und 70 bar 3 Stunden lang nachbehandelt. Anschließend wurde das Lösungsmittel abdestilliert. Auf diese Weise konnten nanokristalline, agglomeratfreie Teilchen (kubisches, mit 8 Mol-% Y stabilisiertes ZrO₂ mit einer durchschnittlichen Größe von 7 nm erhalten werden.

### BEISPIEL 2

55 g einer Lösung von 70% Zirkonium-n-propoxid in Propanol (Fluka) wurden in 400 ml Ethanol gelöst, worauf eine Mischung aus 11 ml HNO₃ (65 Gew.-%) und 12,5 ml Wasser zugetropft wurde. Daraufhin wurde das Lösungsmittel bei 50°C und 200 mbar entfernt. Nach Zugabe von 237 ml Wasser, in dem 2 g Y(NO₃)₃ gelöst waren, entstand ein Sol, das 10 Gew.-% Zr-Salz enthielt. Die Konzentration an Y-Salz betrug ca. 5 Mol-%, bezogen auf Zr.

Das so erhaltene Sol wurde mit jeweils 0,5 g Emulsogen^{(R)} OG und Tween^{(R)} 80 versetzt. Durch Einleiten von Ammoniakgas in das Sol wurde der pH-Wert erhöht und der Feststoff ausgefällt. Anschließend wurde die Suspension in einem Rührautoklaven bei 250°C und 70 bar 3 Stunden lang hydrothermal nachbehandelt. Nach Abdestillieren des Lösungsmittels wurde nanokristallines, redispergierbares 5-Y-ZrO₂ mit Teilchengrößen zwischen 5 und 10 nm erhalten.

### BEISPIEL 3

Eine Lösung von 150 g 70% Zirkonium-n-propoxid in Propanol (Fluka) und 7,3 g Sc(NO₃)₃.6 H₂O wurden in 400 g Ethanol gelöst. Diese Lösung wurde unter Rühren zu 500 ml einer Lösung von jeweils 5 g Emulsogen^{(R)} OG und Tween^{(R)} 80 (pH = 12) getropft. Nach beendeter Zugabe wurde die so gebildete Suspension in einem Rührautoklaven einer Behandlung bei erhöhtem Druck und erhöhter Temperatur (250°C, 65 bar, 3 h) unterzogen. Nach Abdestillieren des Lösungsmittels wurde kubisches, redispergierbares 8-Sc-ZrO₂ mit Teilchengrößen zwischen 5 und 10 nm erhalten.

## Patentansprüche

1. Verfahren zur Herstellung schwach agglomerierter, verdichteter und/oder kristallisierter nanoskaliger Teilchen, **dadurch gekennzeichnet, daß** entweder
(a) eine amorphe oder teilkristalline nanoskalige Teilchen enthaltende Suspension in üblicher Weise aus Precursoren für die nanoskaligen Teilchen hergestellt wird, wobei die Herstellung in einem Lösungsmittel, das für die Teilchen kein oder nur ein geringes Lösungsvermögen besitzt, und in Gegenwart mindestens einer oberflächenblockierenden Substanz durchgeführt wird, oder
(b) ein bereits gebildetes Pulver aus amorphen oder teilkristallinen nanoskaligen Teilchen in Gegenwart der unter (a) angegebenen mindestens einen oberflächenblockierenden Substanz in dem unter (a) angegebenen Lösungsmittel suspendiert wird, oder
(c) ein amorphe oder teilkristalline nanoskalige Teilchen enthaltendes Sol in Gegenwart der unter (a) angegebenen mindestens einen oberflächenblockierenden Substanz in dem unter (a) angegebenen Lösungsmittel suspendiert wird; und
die so hergestellte Suspension bei einer Temperatur zwischen 150 und 350°C und einem Druck zwischen 10 und 100 bar behandelt wird.

2. Verfahren nach Anspruch 1, **dadurch gekennzeichnet, daß** es sich bei den nanoskaligen Teilchen um Oxid(hydrat)-, Sulfid-, Selenid-, Tellurid- und/oder Phosphid-Teilchen, insbesondere um Oxid(hydrat)-Teilchen handelt.

3. Verfahren nach Anspruch 2, **dadurch gekennzeichnet, daß** es sich bei den Oxid(hydrat)-Teilchen um solche von Elementen handelt, die sich zur Herstellung von Glas und/ oder Keramik eignen.

4. Verfahren nach Anspruch 3, **dadurch gekennzeichnet, daß** die Elemente, die sich zur Herstellung von Glas und/oder Keramik eignen, ausgewählt sind aus Haupt- und Nebengruppenmetallen und insbesondere aus mindestens einem von Ba, Al, Ti, Zr, Fe, Y, Sc, Ru, Zn und Pb.

5. Verfahren nach irgendeinem der Ansprüche 1 bis 4, **dadurch gekennzeichnet, daß** in Variante (a) eine nanoskalige Oxid(hydrat)-Teilchen enthaltende Suspension hergestellt wird, indem man aus einer Lösung oder einem Sol, die bzw. das mindestens ein als Oxid(hydrat) ausfällbares Element enthält, das mindestens eine Oxid(hydrat) in Gegenwart mindestens einer oberflächenblockierenden Substanz durch Änderung des pH-Wertes und/oder durch Wasserzugabe ausfällt.

6. Verfahren nach Anspruch 5, **dadurch gekennzeichnet, daß** es sich bei der das als Oxid(hydrat) ausfällbare Element enthaltenden Lösung um eine wäßrige Lösung und/oder eine Lösung in mindestens einem mit Wasser mischbaren organischen Lösungsmittel, insbesondere einem aliphatischen Alkohol mit 1 bis 3 Kohlenstoffatomen, handelt.

7. Verfahren nach Anspruch 6, **dadurch gekennzeichnet, daß** das als Oxid(hydrat) ausfällbare Element im Falle einer wäßrigen Lösung als hydrolysierbares Salz und im Falle einer organischen Lösung als hydrolysierbare metallorganische Verbindung vorliegt.

8. Verfahren nach Anspruch 7, **dadurch gekennzeichnet, daß** es sich bei dem hydrolysierbaren Salz um ein Nitrat, ein Salz einer Carbonsäure, vorzugsweise einer C₁-C₃-Carbonsäure, oder um ein Ammoniumsalz handelt.

9. Verfahren nach irgendeinem der Ansprüche 5 bis 8, **dadurch gekennzeichnet, daß** die Einstellung der zur Ausfällung des Oxid(hydrat)s erforderlichen pH-Wertes mit Hilfe von Ammoniak, organischen Aminen und/oder quaternären Ammoniumsalzen bzw. HNO₃ und/oder kurzkettigen Carbonsäuren oder mit Hilfe von sauren oder basischen Ionenaustauschern erfolgt.

10. Verfahren nach irgendeinem der Ansprüche 5 bis 9, **dadurch gekennzeichnet, daß** die Ausfällung des Oxid(hydrat)s bewirkt wird, indem entweder
(a) der Lösung oder dem Sol, die bzw. das das mindestens eine als Oxid(hydrat) ausfällbare Element und die mindestens eine oberflächenblockierende Substanz enthält, mindestens eine saure oder basische Substanz und/oder Wasser zugesetzt wird; oder
(b) die Lösung oder das Sol, die bzw. das das mindestens eine als Oxid(hydrat) ausfällbare Element enthält, einer wäßrigen Lösung von zur Ausfällung geeignetem pH-Wert, die die mindestens eine oberflächenblockierende Substanz enthält, zugegeben wird.

11. Verfahren nach irgendeinem der Ansprüche 1 bis 10, **dadurch gekennzeichnet, daß** das Lösungsmittel, das für die Teilchen kein oder nur ein geringes Lösungsvermögen besitzt, aus Wasser, Alkoholen, Glykolen, Aminen, aliphatischen, cycloaliphatischen und aromatischen, gegebenenfalls substituierten, insbesondere halogenierten, Kohlenwasserstoffen und Mischungen davon ausgewählt wird.

12. Verfahren nach irgendeinem der Ansprüche 1 bis 11, **dadurch gekennzeichnet, daß** die oberflächenblockierende Substanz aus nichtionischen Tensiden, Cellulosederivaten, längerkettigen Alkoholen, Carbonsäuren, Aminen, Aminosäuren, β-Dicarbonylverbindungen, Polyvinylalkoholen und Mischungen davon ausgewählt wird.

13. Verfahren nach Anspruch 12, **dadurch gekennzeichnet, daß** die nichtionischen Tenside aus Sorbitanestern von Fettsäuren, Polyethylenoxidderivaten dieser Sorbitanester und Fettsäureglykolestern ausgewählt werden.

14. Verfahren nach einem der Ansprüche 1 bis 13, **dadurch gekennzeichnet, daß** die Temperatur- und Druckbedingungen so gewählt werden, daß sie unter den kritischen Daten des eingesetzten Lösungsmittels liegen.

15. Verfahren nach irgendeinem der Ansprüche 1 bis 14, **dadurch gekennzeichnet, daß** es zusätzlich die Entfernung der oberflächenblockierenden Substanz am Ende des Verfahrens und gegebenenfalls eine anschließende Oberflächenmodifizierung der so erhaltenen Teilchen umfaßt.

16. Verfahren nach Anspruch 15, **dadurch gekennzeichnet, daß** die Entfernung der oberflächenblockierenden Substanz Waschen, chemische Reaktion und/oder Dialyse einschließt.

17. Verfahren nach einem der Ansprüche 1 bis 16, **dadurch gekennzeichnet, daß** die erhaltenen Teilchen zur Herstellung von keramischen Formkörpern, Schichten, Folien und Kompositmaterialien verwendet werden.

18. Verfahren nach Anspruch 17, **dadurch gekennzeichnet, daß** die erhaltenen Teilchen zur Herstellung dünner Folien mit einer Dicke von ≤ 20 µm eingesetzt werden.

19. Verfahren nach Anspruch 18, **dadurch gekennzeichnet, daß** die Folie gegossen wird.

## Claims

1. Process for producing weakly agglomerated, densified and/or crystallized nanosize particles, **characterized in that** either
(a) a suspension containing amorphous or partially crystalline nanosize particles is produced in a conventional manner from precursors for the nanosize particles, where the nanosize particles are produced in a solvent which has no solvent capability, or only a low solvent capability, for the particles and in the presence of at least one surface-blocking substance, or
(b) an already formed powder comprising amorphous or partially crystalline nanosize particles is suspended in the solvent specified under (a) in the presence of the surface-blocking substance or substances specified under (a), or
(c) a sol containing amorphous or partially crystalline nanosize particles is suspended in the solvent specified under (a) in the presence of the surface-blocking substance or substances specified under (a); and
the suspension thus produced is treated at a temperature of between 150 and 350°C and at a pressure of between 10 and 100 bar.

2. Process according to Claim 1, **characterized in that** the nanosize particles are oxide or hydrated oxide, sulphide, selenide, telluride and/or phosphide particles, in particular (hydrated) oxide particles.

3. Process according to Claim 2, **characterized in that** the (hydrated) oxide particles are (hydrated) oxides of elements which are suitable for producing glass and/or ceramic.

4. Process according to Claim 3, **characterized in that** the elements which are suitable for producing glass and/or ceramic are selected from among main group metals and transition metals, in particular from among at least one of Ba, Al, Ti, Zr, Fe, Y, Sc, Ru, Zn and Pb.

5. Process according to any of Claims 1 to 4, **characterized in that**, in variant (a), a suspension containing nanosize (hydrated) oxide particles is produced by precipitating at least one (hydrated) oxide from a solution or a sol which contains at least one element which can be precipitated as (hydrated) oxide in the presence of at least one surface-blocking substance by changing the pH and/or by addition of water.

6. Process according to Claim 5, **characterized in that** the solution containing the element which can be precipitated as (hydrated) oxide is an aqueous solution and/or a solution in at least one organic solvent miscible with water, in particular an aliphatic alcohol having from 1 to 3 carbon atoms.

7. Process according to Claim 6, **characterized in that** the element which can be precipitated as (hydrated) oxide is present as a hydrolyzable salt in the case of an aqueous solution and as a hydrolyzable organometallic compound in the case of an organic solution.

8. Process according to Claim 7, **characterized in that** the hydrolyzable salt is a nitrate, a salt of a carboxylic acid, preferably a C₁-C₃-carboxylic acid, or an ammonium salt.

9. Process according to any of Claims 5 to 8, **characterized in that** the pH required for precipitating the (hydrated) oxide is set by means of ammonia, organic amines and/or quaternary ammonium salts or HNO₃ and/or short-chain carboxylic acids or by means of acidic or basic ion exchangers.

10. Process according to any of Claims 5 to 9, **characterized in that** the precipitation of the (hydrated) oxide is effected by either
(a) adding at least one acidic or basic substance and/or water to the solution or the sol which contains the at least one element which can be precipitated as (hydrated) oxide and the at least one surface-blocking substance; or
(b) adding the solution or the sol which contains the at least one element which can be precipitated as (hydrated) oxide to an aqueous solution which has a pH suitable for the precipitation and contains the at least one surface-blocking substance.

11. Process according to any of Claims 1 to 10, **characterized in that** the solvent which has no solvent capability or only a slight solvent capability for the particles is selected from among water, alcohols, glycols, amines, aliphatic, cycloaliphatic, aromatic, unsubstituted or substituted, in particular halogenated, hydrocarbons and mixtures thereof.

12. Process according to any of Claims 1 to 11, **characterized in that** the surface-blocking substance is selected from among nonionic surfactants, cellulose derivatives, relatively long-chain alcohols, carboxylic acids, amines, amino acids, β-dicarbonyl compounds, polyvinyl alcohols and mixtures thereof.

13. Process according to Claim 12, **characterized in that** the nonionic surfactants are selected from among sorbitan esters of fatty acids, polyethylene oxide derivatives of these sorbitan esters and fatty acid glycol esters.

14. Process according to any of Claims 1 to 13, **characterized in that** the temperature and pressure conditions are selected such that they are below the critical data of the solvent used.

15. Process according to any of Claims 1 to 14, **characterized in that** it additionally encompasses the removal of the surface-blocking substance at the end of the process and, if desired, a subsequent surface modification of the particles obtained in this way.

16. Process according to Claim 15, **characterized in that** the removal of the surface-blocking substance includes washing, chemical reaction and/or dialysis.

17. Process according to any of Claims 1 to 16, **characterized in that** the particles obtained are used for producing ceramic shaped bodies, layers, sheets and composite materials.

18. Process according to Claim 17, **characterized in that** the particles obtained are used for producing thin sheets having a thickness of ≤ 20 µm.

19. Process according to Claim 18, **characterized in that** the sheet is formed by a casting process.

## Revendications

1. Procédé de préparation de nanoparticules faiblement agglomérées, compactées et/ou cristallisées, **caractérisé par** le fait
(a) que l'on prépare d'une manière usuelle une suspension contenant des nanoparticules amorphes ou partiellement cristallins, à partir de précurseurs de ces nanoparticules, cette préparation étant réalisée dans un solvant qui est un non-solvant ou un mauvais solvant des particules et en présence d'au moins un composé bloquant la surface, ou
(b) que l'on met en suspension une poudre préformée de nanoparticules amorphes ou partiellement cristallines en présence d'au moins un composé bloquant la surface mèntionné au point (a) dans le solvant mentionné au point (a), ou
(c) que l'on met en suspension un sol contenant des nanoparticules amorphes ou partiellement cristallines en présence d'au moins un composé bloquant la surface mentionné au point (a) dans le solvant mentionné au point (a), et
que l'on traite la suspension ainsi obtenue à une température comprise dans l'intervalle allant de 150 °C à 350 °C et à une pression comprise dans l'intervalle allant de 10 à 100 bars.

2. Procédé selon la revendication 1, **caractérisé par** le fait les nanoparticules sont des particules à base d'oxyde(/hydrate), de sulfure, de séléniure, de telliure et/ou de phosphure, en particulier des particules d'oxyde(/hydrate).

3. Procédé selon la revendication 2, **caractérisé par le fait que** les particules à base d'oxyde(/hydrate) sont des particules d'oxyde(/hydrate) d'éléments appropriés pour la fabrication de verres et/ou de matériaux céramiques.

4. Procédé selon la revendication 3, **caractérisé par le fait que** les éléments appropriés pour la fabrication de verres et/ou de matériaux céramiques sont choisis parmi les métaux des groupes principaux et secondaires et en particulier parmi Ba, Al, Ti, Zr, Fe, Y Sc, Ru, Zn et Pb.

5. Procédé selon l'une quelconque des revendications 1 à 4, **caractérisé par le fait que** l'on prépare, dans la variante (a), une suspension contenant des nanoparticules à base d'oxyde(/hydrate) en faisant précipiter - par modification du pH et/ou par addition d'eau - le ou les oxydes(/hydrates) en présence d'au moins un composé bloquant la surface, à partir d'une solution ou d'un sol contenant au moins un élément susceptible d'être précipité sous forme d'oxyde(/hydrate).

6. Procédé selon la revendication 5, **caractérisé par le fait que** la solution contenant un élément susceptible d'être précipité sous forme d'oxyde(/hydrate) est une solution aqueuse et/ou une solution dans au moins un solvant miscible avec l'eau, en particulier un alcool aliphatique contenant de 1 à 3 atomes de carbone.

7. Procédé selon la revendication 6, **caractérisé par le fait que** l'élément susceptible d'être précipité sous forme d'oxyde(/hydrate), lorsqu'il est en solution aqueusè, se présente sous forme d'un sel hydrolysable, et lorsqu'il est en solution dans un solvant organique, se présente sous forme d'un composé organométallique hydrolysable.

8. Procédé selon la revendication 7, **caractérisé par le fait que** le sel hydrolysable est un nitrate, un sel d'un acide carboxylique, de préférence d'un acide carboxylique en C₁₋₃, ou un sel d'ammonium.

9. Procédé selon l'une quelconque des revendications 5 à 8, **caractérisé par le fait que** l'ajustement du pH nécessaire pour faire précipiter l'oxyde(/hydrate) se fait par addition d'ammoniaque, d'amines organiques et/ou de sels d'ammonium quaternaire ou de HNO₃ et/ou d'acides carboxyliques à chaîne courte ou encore à l'aide de résines échangeuses d'ions acides ou basiques.

10. Procédé selon l'une quelconque des revendications 5 à 9, **caractérisé par le fait que** l'on fait précipiter l'oxyde(/hydrate)
(a) en ajoutant à la solution ou au sol contenant le ou les élément(s) susceptible(s) d'être précipité(s) sous forme d'oxyde(/hydrate) et le ou les composé(s) bloquant la surface, au moins un composé acide ou basique et/ou de l'eau, ou bien
(b) en versant la solution ou le sol contenant le ou les élément(s) susceptibles d'être précipité(s) sous forme d'oxyde(/hydrate) dans une solution aqueuse ayant un pH approprié pour la précipitation et contenant au moins un composé bloquant la surface.

11. Procédé selon l'une quelconque des revendications 1 à 10, **caractérisé par le fait que** le solvant qui est un non-solvant ou un mauvais solvant pour les particules, est choisi. parmi l'eau, les alcools, les glycols, les amines, les hydrocarbures aliphatiques, cycloaliphatiques et aromatiques, éventuellement substitués, et en particulier halogénés, et des mélanges de ces composés.

12. Procédé selon l'une quelconque des revendications 1 à 11, **caractérisé par le fait que** le composé bloquant la surface est choisi parmi les agents tensioactifs non ioniques, les dérivés de cellulose, les alcools à longue chaîne, les acides carboxyliques, les amines, les acides aminés, les composés β-dicarbonyle, le poly(alcool vinylique) et des mélanges de ceux-ci.

13. , Procédé selon la revendication 12, **caractérisé par le fait que** les agents tensioactifs nonioniques sont choisis parmi les esters de sorbitane et d'acides gras et les dérivés polyéthoxylés de ces esters de sorbitane et d'acides gras.

14. Procédé selon l'une quelconque des revendications 1 à 13, **caractérisé par le fait que** les conditions de température et de pression sont choisies de manière à être inférieures aux paramètres critiques du solvant utilisé.

15. Procédé selon l'une quelconque des revendications 1 à 14, **caractérisé par le fait qu'**il comprend en outre, à la fin du procédé, l'élimination du composé bloquant la surface et éventuellement, ensuite, une réaction de modification de la surface des particules obtenues.

16. Procédé selon la revendication 15, **caractérisé par le fait que** l'élimination du composé bloquant la surface comprend un lavage, une réaction chimique et/ou une dialyse.

17. Procédé selon l'une quelconque des revendications 1 à 16, **caractérisé par le fait que** les particules obtenues sont utilisées pour la fabrication d'articles moulés, de couches, de feuilles et de matériaux composites céramiques.

18. Procédé selon la revendication 17, **caractérisé par le fait que** l'on utilise les particules obtenues pour la fabrication de feuilles minces ayant une épaisseur inférieure ou égale à 20 µm.

19. Procédé selon la revendication 18, **caractérisé par le fait que** la feuille est préparée par coulée.
